# EUROPEAN PATENT APPLICATION

(11) **EP 1 741 746 A1**
(43) Date of publication of application: **10.01.2007**
(21) Application number: 05736949.8
(22) Date of filing: 28.04.2005
(51) Int. Cl.: C08L 23/08, B60C 1/00, C08L 9/00

(54) **PROCESS FOR PRODUCING RUBBER COMPOSITION, RUBBER COMPOSITION AND USE THEREOF**

(30) Priority: 28.04.2004 JP 2004134667
(71) Applicant: Mitsui Chemicals, Inc., Tokyo 105-7117 (JP); THE YOKOHAMA RUBBER CO., LTD., Tokyo 105-8685 (JP)
(72) Inventor: ICHINO, Kotaro, c/o MITSUI CHEMICALS, INC., Ichihara-shi, Chiba 2990108 (JP); KUNIZANE, Masao, c/o MITSUI CHEMICALS, INC., Ichihara-shi, Chiba 2990108 (JP); ISHII, Yuji, c/o MITSUI CHEMICALS, INC., Ichihara-shi, Chiba 2990108 (JP); HIRAOKA, Kunihide, c/o MITSUI CHEMICALS, INC., Ichihara-shi, Chiba 2990108 (JP); KAWASAKI, Masaaki, c/o MITSUI CHEMICALS, INC., Ichihara-shi, Chiba 2990108 (JP); MURAKAMI, Hidetatsu, c/o MITSUI CHEMICALS, INC., Ichihara-shi, Chiba 2990108 (JP); OKADA, Keiji, c/o MITSUI CHEMICALS, INC., Sodegaura-shi, Chiba 2990265 (JP)
(74) Representative: Cresswell, Thomas Anthony
(86) International application number: PCT/JP2005/008166
(87) International publication number: WO 2005/105912

(57) **Abstract**

A process for producing a rubber composition containing a nonconjugated polyene copolymer (A), a softener (B) and a diene rubber (C), comprising: a step of mixing a copolymer composition (I), said copolymer composition (I) comprising 100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of the softener (B); the diene rubber (C); and optionally further the softener (B). A tire tread using the rubber composition and a tire having the tire tread.

## Description

### TECHNICAL FIELD

The present invention relates to a new and useful process for producing a rubber composition containing a nonconjugated polyene copolymer, a softener and a diene rubber, a rubber composition obtained by the process, and use of thereof.

### BACKGROUND ART

Heretofore, as a rubber composition for an automobile tire tread, there has generally been used a rubber composition of a styrene/butadiene copolymer rubber (SBR) and a natural rubber. Generally, an automobile tire is desired to have excellent fuel consumption performance and abrasion resistance in terms of lowering fuel consumption of automobiles associated with saving of energy and to have high braking performance in terms of stability. However, the conventional rubber composition of the styrene/butadiene copolymer rubber (SBR) and the natural rubber has a problem that a tire sufficiently satisfying these performances cannot be produced.

JP-A No. 2001-114837 (Patent Document 1) discloses a rubber composition that can give a tire excellent in braking performance and fuel consumption, but it cannot be said that this rubber composition has sufficient fatigue resistance, mechanical strength, or the like.

Therefore, a rubber composition, which can give a tire excellent in braking performance and fuel consumption and which is excellent in fatigue resistance and mechanical strength, has been desired.
[Patent Document 1] JP-A No. 2001-114837

### DISCLOSURE OF THE PRESENT INVENTION

### PROBLEMS TO BE SOLVED BY THIS INVENTION

The present invention aims is to overcome the above problems associated with related arts, and thus it is an object of the present invention to provide a rubber composition, which can give a tire excellent in braking performance and fuel consumption performance and which is further excellent in mechanical strength and fatigue resistance, a process for producing the rubber composition and uses of the rubber composition.

Furthermore, it is another object of the present invention to provide a material suitable for producing a rubber composition, which can give a tire excellent in braking performance and fuel consumption performance and which is further excellent in mechanical strength and fatigue resistance.

### MEANS FOR SOLVING THE PROBLEMS

The present inventors have studied extensively and intensively to solve the above problems and have found that a rubber composition, which can give a tire excellent in braking performance and fuel consumption performance and which is further excellent in mechanical strength and fatigue resistance, can be produced through mixing a copolymer composition containing a nonconjugated polyene copolymer and a softener and a diene rubber, and then have completed the present invention. These knowkledge has been found for the first time by the inventors.

A process for producing a rubber composition containing a nonconjugated polyene copolymer (A), a softener (B) and a diene rubber (C) (hereinafter simply referred to as a "rubber composition") according to the invention comprises a step of mixing a copolymer composition (I) comprising 100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of the softener (B); the diene rubber (C); and optionally further the softener (B).

A further process for producing a rubber composition according to the invention comprises a step of preparing a copolymer composition (I) comprising 100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of the softener (B); and mixing the copolymer composition (I), the diene rubber (C) and optionally further the softener (B).

The weight ratio [(A)/(C)] of the nonconjugated polyene copolymer (A) and the diene rubber (C) is preferably 60/40 to 0.1/99.9 and the content of the softener (B) is preferably 1 to 200 parts by weight based on 100 parts by weight of the total amount of the nonconjugated polyene copolymer (A) and the diene rubber (C).

The copolymer composition (I) has a Mooney viscosity [ML₁₊₄ (100°C), JIS K6300] of preferably 5 to 100, more preferably 10 to 50.

The structural units derived from α-olefin (A1) preferably comprise structural units (a) derived from ethylene, and have a molar ratio [(a)/(b)] of the structural units (a) derived from ethylene and the structural units (b) derived from α-olefin having 3 or more carbon atoms of preferably 100/0 to 1/99, more preferably 90/10 to 30/70.

At least a part of the nonconjugated polyene (A2) is preferably nonconjugated cyclic polyene (A2a).

The structural units derived from nonconjugated cyclic polyene (A2a) are preferably contained in the range of 4 mol% or more based on 100 mol% of the total amount of the structural units derived from α-olefin (A1) and the structural units derived from nonconjugated polyene (A2).

The rubber composition according to the invention is characterized in that it is produced by the above process.

A rubber material for a tire according to the invention is characterized in that it comprises the rubber composition.

A tire tread according to the invention is characterized in that it formed using the rubber material for a tire.

A tire according to the invention is characterized in that it provided with the tire tread.

The copolymer composition (I) according to the invention comprises 100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of a softener (B).

The copolymer composition (I) has a Mooney viscosity [ML₁₊₄ (100°C), JIS K6300] of preferably 5 to 100, more preferably 10 to 50.

The softener (B) is preferably a petroleum softener.

### EFFECT OF THE INVENTION

According to the production process of the invention, a rubber composition, which can give a tire excellent in braking performance and fuel consumption performance and which is further excellent in mechanical strength and fatigue resistance, is obtained.

The rubber composition obtained by the process according to the invention can be particularly suitably used for uses such as a tire since it has excellent mechanical strength and fatigue resistance.

A tire produced from the rubber composition obtained by the process according to the invention is excellent in braking performance, fuel consumption performance, mechanical strength and fatigue resistance.

### BEST MODE FOR CARRYING OUT THE INVENTION

Hereinafter, a process for producing a rubber composition according to the present invention will be explained in detail.

### [Process for producing rubber composition]

The process for producing a rubber composition according to the invention rubber composition comprises mixing a copolymer composition (I) comprising a nonconjugated polyene copolymer (A) and a softener (B), and a diene rubber (C).

When a rubber composition is produced by the process according to the invention, a rubber composition having excellent mechanical strength and fatigue resistance can be obtained, as compared to the case that a rubber composition comprising a nonconjugated polyene copolymer (A), a softener (B) and a diene rubber (C) is produced without preliminarily preparing a composition comprising the nonconjugated polyene copolymer (A) and the softener (B). Further, a rubber composition also having excellent abrasion resistance can be obtained.

That is, the rubber composition produced by the process according to the invention is excellent in rubber elasticity, weather resistance, ozone resistance, and particularly mechanical property and fatigue resistance. Further, the rubber composition is also excellent in abrasion resistance. Therefore, by applying the rubber composition of the invention to, for example, a tire, the obtained tire is excellent in both of braking performance and fuel consumption performance, and is also excellent in rubber elasticity, weather resistance and ozone resistance, in particularly mechanical property and fatigue resistance. Furthermore, the tire is also excellent in abrasion resistance.

When the rubber composition is produced by the process of the invention, the morphology of the nonconjugated polyene copolymer (A) in the rubber composition (dispersion state of the nonconjugated polyene copolymer (A) in the diene rubber (C)) is optimized and thus characteristics of the rubber composition are improved as described above.

First, each component in the rubber composition produced by the process according to the invention will be described, followed by a specific process thereof.

### <Components of rubber composition>

### (A) Nonconjugated polyene copolymer

The nonconjugated polyene copolymer (A) used in the present invention is a random copolymer comprising the structural units derived from α-olefin (A1) and the structural units derived from nonconjugated polyene (A2).

The content of structural units derived from α-olefin (A1) is 96 to 70 mol%, preferably 95 to 75 mol% and more preferably 94 to 80 mol%, and the content of structural units derived from nonconjugated polyene (A2) is 4 to 30 mol%, preferably 5 to 25 mol% and more preferably 6 to 20 mol%.

The content of α-olefin (A1) and nonconjugated polyene (A2) in this range is preferred from the viewpoint of improving co-vulcanizability of the nonconjugated polyene copolymer (A) and the diene rubber (C) with each other.

Further, the glass transition temperature (Tg) of the nonconjugated polyene copolymer (A) is -25 to 20°C, preferably -20 to 15°C, more preferably -15 to 10°C. The glass transition temperature (Tg) in this range is preferred from the viewpoint of improving braking performance.

Further, the glass transition temperature (Tg) can be obtained from temperature-dependent measurements of tan δ in accordance with a viscoelasticity test. In the present invention, the temperature dependency of the loss tangent tan δ (vibration damping index) is determined, using a polymer sheet of 2 mm thickness, on a viscoelasticity tester (viscoelasticity tester manufactured by Rheometrics Inc.; Model RDS-2) under conditions of a measuring temperature of -70 to 30°C, a frequency of 10 Hz, a strain ratio of 0.5% and a temperature elevation rate of 4°C/min, wherein the temperature, at which the value of the tan δ is maximum, is defined as the glass transition temperature (Tg) .

A Mooney viscosity [ML₁₊₄ (100°C), JIS K6300] of the nonconjugated polyene copolymer (A) is not particularly limited, but preferably 5 to 200, more preferably 5 to 150.

Further, the nonconjugated polyene copolymer (A) has an intrinsic viscosity [η], as measured in decalin at 135°C, of preferably 0.01 to 10 dl/g, more preferably 0.01 to 7 dl/g, particularly preferably 0.01 to 5 dl/g.

When the nonconjugated polyene copolymer (A) has the intrinsic viscosity [η] in the above-mentioned range, the nonconjugated polyene copolymer (A) is excellent in mechanical strength and workability, and the closer the intrinsic viscosity value to the above-mentioned preferable range and further to the above-mentioned more preferable range, the more superior these properties will be. In the present invention, either of the Mooney viscosity or the intrinsic viscosity [η] is preferably in the above-mentioned range. Further, the present invention includes an embodiment in which both of the Mooney viscosity and the intrinsic viscosity [η] are in the above-mentioned range.

When the nonconjugated polyene copolymer (A) is used as a raw material of the rubber material for tires, it is preferable that its crystallinity is lower.

### (A1) α-olefin

Examples of the α-olefin (A1) constituting the nonconjugated polyene copolymer (A) used in the present invention include α-olefins having 2 to 20 carbon atoms, preferably 2 to 15 carbon atoms, such as ethylene, propylene, 1-butene, 1-hexene, 1-octene, 1-decene, 1-dodecene and 4-methyl-1-pentene, and more preferably, from the viewpoint of excellent fatigue resistance of the rubber composition, α-olefins having 4 to 8 carbon atoms, particularly butene, hexene and octene. These α-olefins (A1) may be used alone or in a combination of two or more thereof.

The nonconjugated polyene copolymer (A) used in the present invention preferably contains, as the structural units derived from α-olefin (A1), at least a structural unit (a) derived from ethylene, in which the molar ratio [(a)/(b)] of the structural unit (a) derived from ethylene to the structural units (b) derived from the α-olefin having 3 or more carbon atoms is preferably in the range from 100/0 to 1/99, more preferably from 100/0 to 50/50, still more preferably from 95/5 to 50/50.

### (A2) Nonconjugated polyene

The nonconjugated polyene (A2) constituting the nonconjugated polyene copolymer (A) used in the present invention may be cyclic or linear. Examples of the nonconjugated polyene (A2) include nonconjugated cyclic polyene (A2a) and nonconjugated linear polyene (A2b).

### (A2a) Nonconjugated cyclic polyene

The nonconjugated cyclic polyene (A2a) constituting the nonconjugated polyene copolymer (A2) used in the present invention may be used alone or in a combination of two or more therof.

As the nonconjugated cyclic polyene (A2a), a cyclic compound having two or more nonconjugated unsaturated bonds can be used without any restriction, but a nonconjugated cyclic polyene represented by the following formula (1-1) is preferably used: 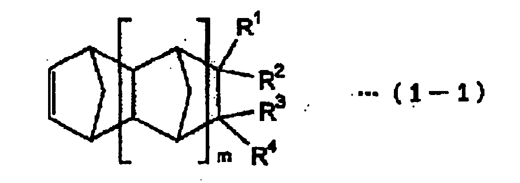 wherein m is an integer of 0 to 2;
R¹ to R⁴ are each independently an atom or group selected from the group consisting of a hydrogen atom, a halogen atom and a hydrocarbon group, and examples of the halogen atom include a fluorine atom, a chlorine atom, a bromine atom or an iodine atom and the hydrocarbon group may have a double bond;
R¹ to R⁴ may be linked with one another to form a monocylic or polycyclic ring which may have a double bond;
R¹ and R², or R³ and R⁹ may together form an alkylidene group; and
R¹ and R³, or R² and R⁴ may be linked to each other to form a double bond, with the proviso that R¹ to R⁴ satisfy at least one of the following (i) to (iv) conditions:
(i) R¹ to R⁴ are linked with one another to form a monocyclic or polycyclic ring having a double bond;
(ii) R¹ and R², or R³ and R⁴ together form an alkylidene group;
(iii) R¹ and R³, or R² and R⁴ are linked to each other to form a double bond; and
(iv) at least one of R¹ to R⁴ represents an unsaturated hydrocarbon group having one or more double bonds.

Examples of the hydrocarbon group represented by R¹ to R⁴ in the above formula (1-1) include an alkyl group having 1 to 20 carbon atoms, a halogenated alkyl group having 1 to 20 carbon atoms, a cycloalkyl group having 3 to 15 carbon atoms, an aromatic hydrocarbon group having 6 to 20 carbon atoms and an unsaturated hydrocarbon group having at least one double bond.

More specifically, examples of the alkyl group include a methyl group, an ethyl group, a propyl group, an isopropyl group, an amyl group, a hexyl group, an octyl group, a decyl group, a dodecyl group and an octadecyl group. Examples of the halogenated alkyl group include those in which at least a portion of the hydrogen atoms in the above-mentioned alkyl group is substituted with a halogen atom such as fluorine, chlorine, bromine or iodine. Examples of the cycloalkyl group include a cyclohexyl group. Examples of the aromatic hydrocarbon group include a phenyl group and a naphthyl group. Examples of the unsaturated hydrocarbon group include a vinyl group and an allyl group.

Further, R¹ and R², R³ and R⁴, R¹ and R³, R² and R⁴, R¹ and R⁴, or R² and R³ in the formula (1-1) may be linked to each other (under cooperation) to form a monocyclic or polycyclic ring, and the monocyclic or polycyclic ring may have double bond(s).

Further, R¹ and R², or R³ and R⁴ in the formula (1-1) may together form an alkylidene group. Such an alkylidene group is usually an alkylidene group having 1 to 20 carbon atoms and specific examples thereof includes a methylene group (CH₂=), an ethylidene group (CH₃CH=), a propylidene group (CH₃CH₂CH=) and an isopropylidene group ((CH₃)₂C=).

Examples of the nonconjugated cyclic polyene (A2a) represented by the formula (1-1) include
a nonconjugated cyclic polyene (A2a-1) having an alkylidene group, in which the alkylidene group is formed by R¹ and R², or R³ and R⁴,
an polycyclic nonconjugated cyclic polyene (A2a-2) in which R¹ to R⁴ may be linked with one another to form a monocyclic or polycyclic ring having at least one double bond,
a nonconjugated cyclic polyene (A2a-3) having an unsaturated hydrocarbon group in which at least one of R¹ to R⁴ is a monovalent unsaturated hydrocarbon group having at least one double bonds, and
an ring-symmetrical nonconjugated cyclic polyene (A2a-4) in which either R¹ and R³, or R² and R⁴ are linked to each other to form a double bond so that the resulting cyclic polyene has a bilaterally symmetry with respect to a line connecting the bridgehead carbon atoms or the commonly shared carbon atoms of the condensed ring with each other as an axis of symmetry.

Specific examples of the nonconjugated cyclic polyene (A2a-1) having an alkylidene groupinclude those which are represented by the following formula (1-2): 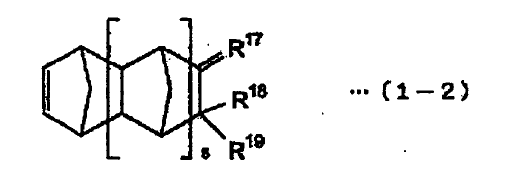 wherein s represents an integer of 0 to 2; R¹⁷ represents an alkylidene group; R¹⁸ and R¹⁹ each independently represents an atom or a group selected from the group consisting of a hydrogen atom, a halogen atom and a hydrocarbon group and R¹⁸ and R¹⁹ may together form an alkylidene group.

Specific examples of the alkylidene group represented by R¹⁷ in the formula (1-2), include those having 1 to 20 carbon atoms, such as a methylene group, an ethylidene group, a propylidene group and an isopropylidene group.

The symbol s in the formula (1-2) preferably represents 0. Examples of the halogen atom represented by R¹⁸ and R¹⁹ include the same as those in the formula (1-1). Examples of the hydrocarbon group include an alkyl group having 1 to 20 carbon atoms, a halogenated alkyl group having 1 to 20 carbon atoms, a cycloalkyl group having 3 to 15 carbon atoms and an aromatic hydrocarbon group having 6 to 20 carbon atoms.

Specific examples of the alkylidene-containing nonconjugated cyclic polyene (A2a-1) represented by the formula (1-2) include 5-methylene-2-norbornene, 5-ethylidene-2-norbornene (ENB), 5-isopropylidene-2-norbornene and the compounds given below. Among them, 5-ethylidene-2-norbornene is preferred.

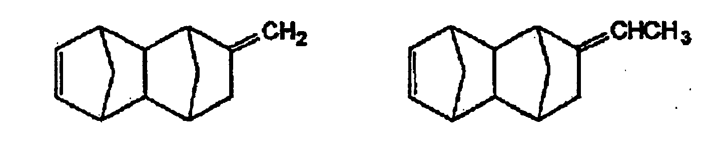

Specific examples of the above-mentioned polycyclic nonconjugated cyclic polyene (A2a-2) include dicyclopentadiene (DCPD), dimethyldicyclopentadiene and the compounds given below.

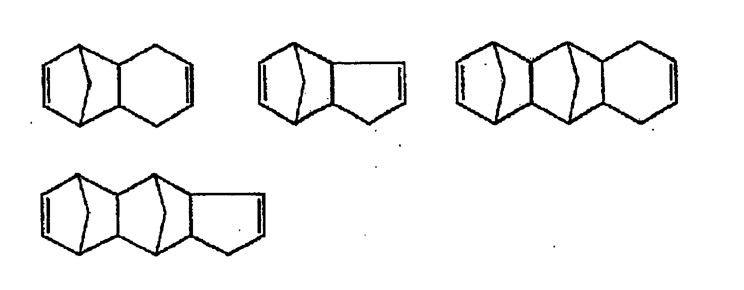

Specific examples of the above-mentioned nonconjugated cyclic polyene (A2a-3) having an unsaturated hydrocarbon group include 5-vinyl-2-norbornene and the compounds given below.

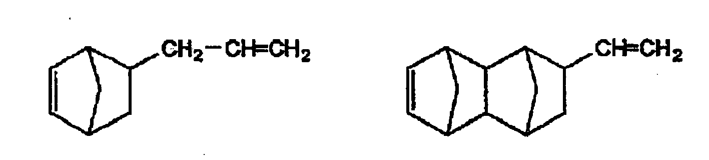

Specific examples of the above-mentioned ring-symmetrical nonconjugated cyclic polyene (A2a-4) include the compounds given below.

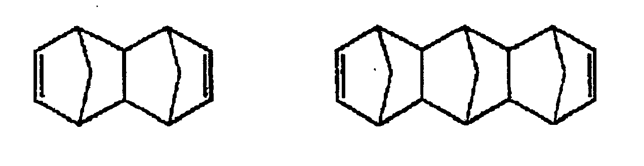

For the nonconjugated cyclic polyene (A2a) represented by the formula (1-1), those in which m represents 0 are preferred, and the nonconjugated cyclic polyenes (A2a-1) having an alkylidene group in which m in the formula (1-1) represents 0, namely, those in which s in the formula (1-2) represents 0, or the polycyclic nonconjugated cyclic polyenes (A2a-2) in which m in the formula (1-1) represents 0, are particularly preferred. Of these, most preferred is the nonconjugated cyclic polyene (A2a-1) having an alkylidene group in which s in the formula (1-2) represents 0, and specifically 5-ethylidene-2-norbornene (ENB) is most preferable.

### (A2b) Nonconjugated linear polyene

Examples of the nonconjugated polyene copolymer (A2) used in the present invention include nonconjugated linear polyene (A2b). The nonconjugated linear polyene (A2b) is a compound having two or more nonconjugated unsaturated bonds in one molecule. As the nonconjugated linear polyene (A2b), nonconjugated dienes, nonconjugated trienes, nonconjugated tetraenes and the like may be employed. The nonconjugated linear polyene (A2b) may be used alone or in a combination of two or more thereof.

As the nonconjugated linear polyene (A2b), nonconjugated trienes or tetraenes (A2b-1) represented by the following formula (2-1), above all, nonconjugated trienes (A2b-2) represented by the following formula (2-2) are preferable in view of the balance between the braking performance and the fuel consumption performance of a tire produced from the rubber composition which will be described later, the vulcanization feature of the rubber composition, the handlability (scorching stability) on the vulcanizaition, and the like. 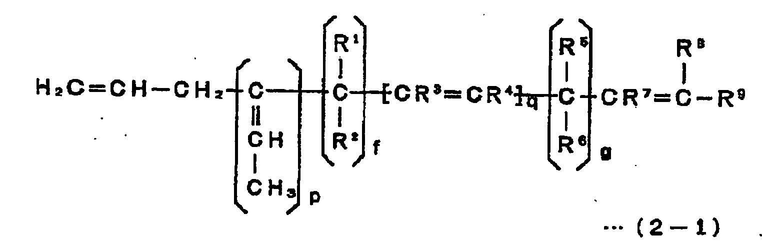 wherein p and q are 0 or 1 with the proviso that p and q are not simultaneously 0;
f is an integer of 0 to 5 with the proviso that f is not 0 when both p and q are 1;
g is an integer of 1 to 6;
R¹, R², R³, R⁴, R⁵, R⁶ and R⁷ are each independently a hydrogen atom or an alkyl group having 1 to 3 carbon atoms;
R⁸ is an alkyl group having 1 to 3 carbon atoms; and
R⁹ is a hydrogen atom, an alkyl group having 1 to 3 carbon atoms or a group represented by - (CH₂)ₙ-CR¹⁰=C (R¹¹) R¹² wherein n is an integer of 1 to 5, R¹⁰ and R¹¹ are each independently a hydrogen atom or an alkyl group having 1 to 3 carbon atoms and R¹² is an alkyl group having 1 to 3 carbon atoms, with the proviso that R⁹ is a hydrogen atom or an alkyl group having 1 to 3 carbon atoms when both p and q are 1. 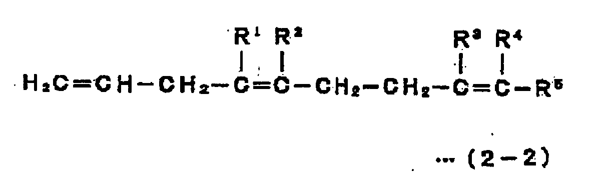 wherein R¹ to R⁵ are each independently a hydrogen atom, a methyl group or an ethyl group, with the proviso that R⁴ and R⁵ do not simultaneously represent a hydrogen atom.

Further, the nonconjugated trienes (A2b-2) represented by the formula (2-2) correspond to the nonconjugated trienes or tetraenes (A2b-1) represented by the formula (2-1), above all, the nonconjugated trienes wherein f is 0, g is 2, p is 0, q is 1 and R⁵ and R⁶ are a hydrogen atom. Among the nonconjugated trienes (A2b-2) represented by the formula (2-2), the compounds in which both R³ and R⁵ are a methyl group are preferred. The nonconjugated polyene copolymer according to the present invention obtained using such nonconjugated triene (A2b-2) as monomer raw materials can be used for the rubber composition which will be described later and from which tires superior especially in both of the braking performance and the fuel consumption performance can be produced.

Specific examples of the nonconjugated linear polyene (A2b) include 1,4-hexadiene, 1,3-butadiene, isoprene, 7-methyl-1,6-octadiene, 6-methyl-1, 6-octadiene, 6,7-dimethyl-1,6-octadiene, 7-methyl-1,6-decadiene, 6-methyl-1,6-nonadiene, 6,7-dimethyl-1,6-nonadiene, 7-methyl-1,6-nonadiene and 6-methyl-1,6-decadiene.

Examples of the nonconjugated trienes and tetraenes (A2b-1) represented by the formula (2-1) include compounds given below (excluding those falling under the formula (2-2)):

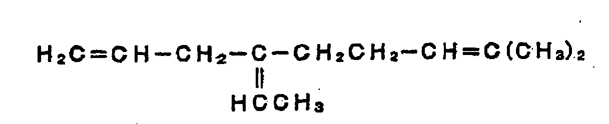

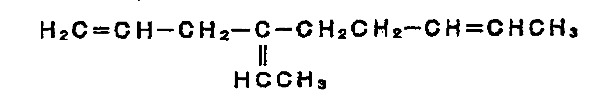

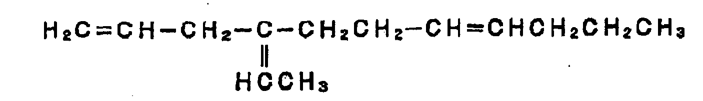

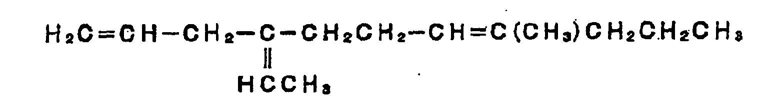

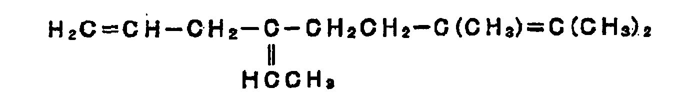

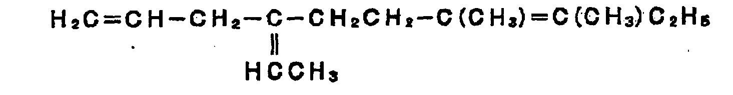

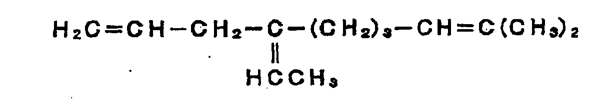

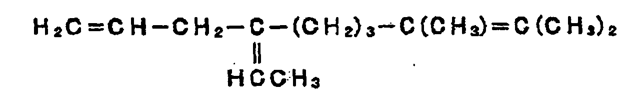

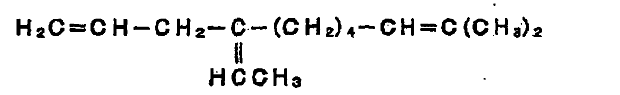

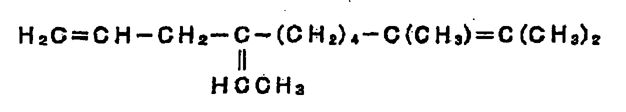

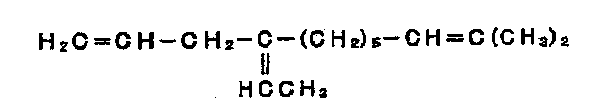

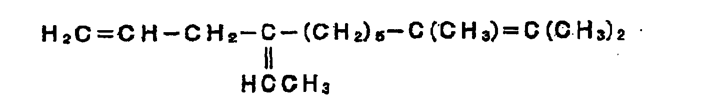

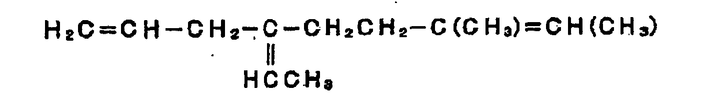

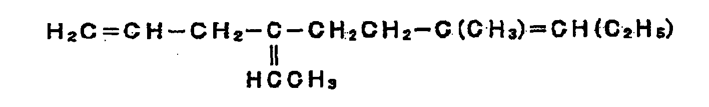

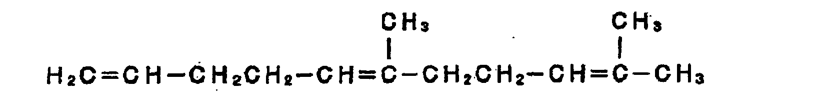

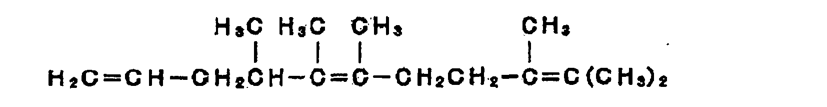

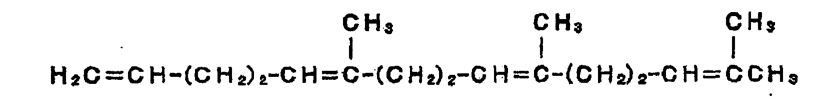

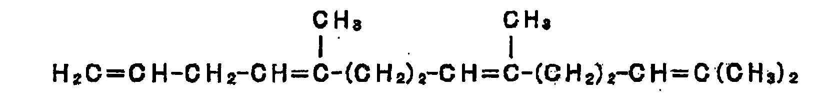

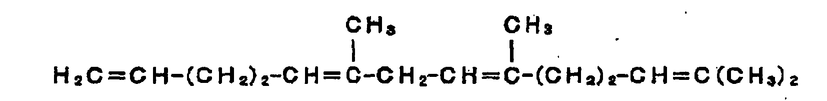

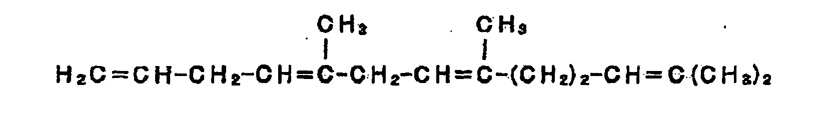

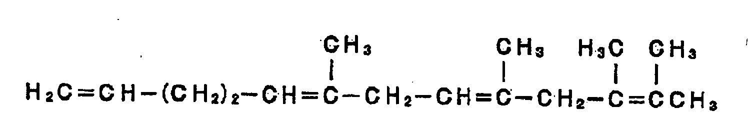

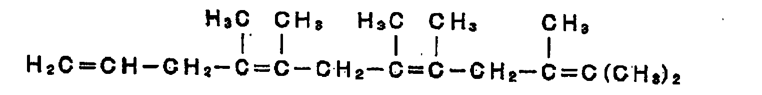

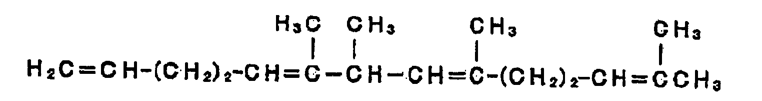

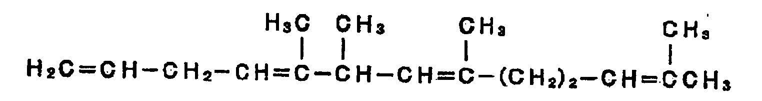

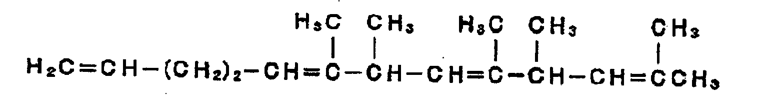

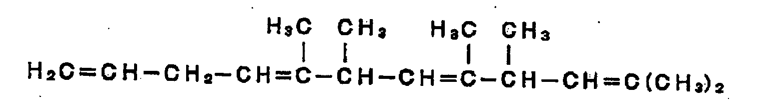

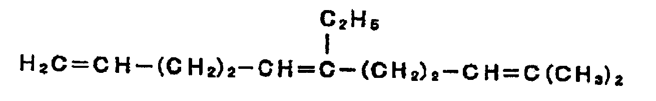

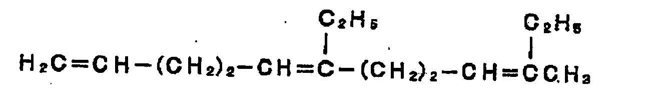

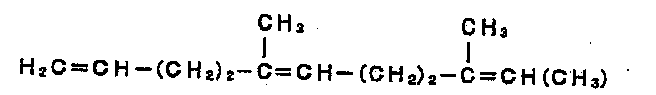

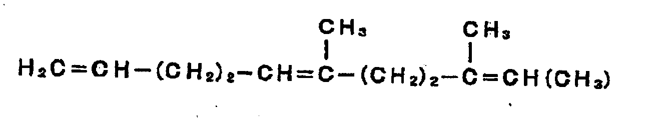

Among the above nonconjugated trienes and tetraenes (A2b-1), the first given 4-ethylidene-8-methyl-1,7-nonadiene is preferable from the viewpoint of excellent braking performance and fuel consumption performance of a tire produced from a rubber composition to be described later.

Specific examples of the nonconjugated trienes (A2b-2) represented by the formula (2-2) include compounds given below:

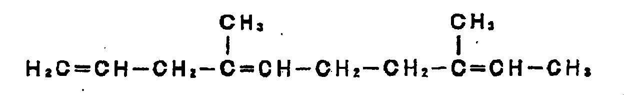

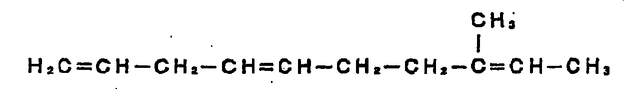

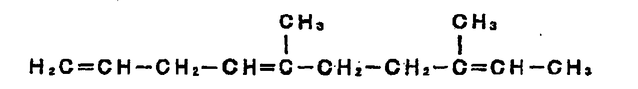

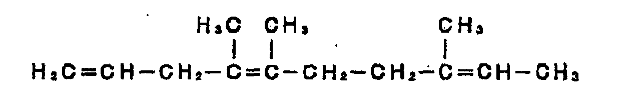

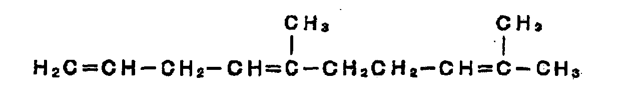

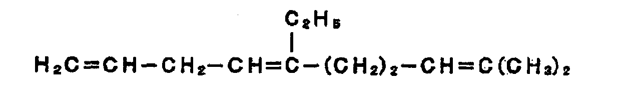

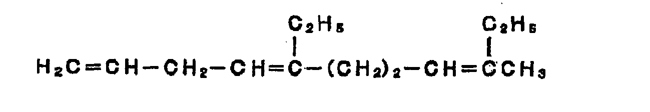

Among the above nonconjugated trienes (A2b-2), the first given 4,8-dimethyl-1,4,8-decatriene is preferred. The nonconjugated polyenes represented by the formulae (2-1) and (2-2) take usually geometrical isomeric structures (trans- and cis-isomers). The nonconjugated polyene (A2b) to be used as a monomer in the present invention may be a mixture of the trans- and cis-isomers or composed solely of either one of the isomers.

The nonconjugated trienes or tetraenes (A2b-1) represented by the formula (2-1) and the nonconjugated trienes (A2b-2) represented by the formula (2-2) can be produced by a known method, for example, a method described in JP-A No. 2001-114837 (paragraphs [0036] to [0042]).

### (Process for producing nonconjugated polyene copolymer (A)

The nonconjugated polyene copolymer (A) used in the present invention can be produced by copolymerizing an α-olefin (A1) and a nonconjugated polyene (A2) in the presence of a catalyst.

As the catalyst, a known catalyst which comprises a transition metal compound, such as a compound of vanadium (V), zirconium (Zr) and titanium (Ti), and an organoaluminum compound or an organoaluminum-oxy compound and/or an ionized ionic compound, for example, a catalyst described in JP-A No. 2001-114837 (paragraphs [0043] to [0072]) may be employed.

For producing the nonconjugated polyene copolymer according to the invention, the α-olefin (A1) and the nonconjugated polyene (A2) are subjected to copolymerization usually in a liquid phase in the presence of the vanadium or metallocene catalyst. Here, a hydrocarbon solvent is generally used, but monomers may be used as the solvent.

The copolymerization can be carried out under known reaction conditions, for example, those as described in JP-A No. 2001-114837 (paragraphs [0074] to [0081]) filed in the name of an applicant of the present application.

On the copolymerization, the α-olefin (A1) and the nonconjugated polyene (A2) are supplied to the polymerization system in such an amount that the nonconjugated polyene copolymer is obtained in the composition specified above. Further, on the copolymerization, a molecular weight regulator such as hydrogen may be used.

By performing the copolymerization as described above, the nonconjugated polyene copolymer (A) used in the invention is usually obtained as a polymer solution containing the same. This polymer solution is treated in an ordinary manner to obtain the nonconjugated polyene copolymer.

### (B) Softener

As the softener (B), those which have conventionally been incorporated in rubbers may widely be used. Examples of the softener (B) include petroleum softeners such as paraffinic process oils, naphthenic process oils and aromatic process oils;
synthetic oil-based softeners;
co-oligomers of ethylene and α-olefin;
paraffin wax;
liquid paraffin;
white oil;
petrolatum;
coal tar softeners such as coal tar and coal tar pitch;
vegetable oil softeners such as castor oil, cottonseed oil, linseed oil, rapeseed oil, coconut oil, palm oil, soybean oil, arachis oil, vegetable wax, rosin, pine oil, dipentene, pine tar and tall oil;
factice such as brown factice, white factice and amber factice;
waxes such as beeswax, carnauba wax and lanolin;
fatty acids and fatty acid salts, such as ricinolic acid, palmitic acid, myristic acid, barium stearate, calcium stearate, magnesium stearate, zinc stearate and zinc laurate;
ester plasticizers such as dioctyl phthalate, dioctyl adipate and dioctyl sebacate;
cumarone-indene resins;
phenol-formaldehyde resins;
terpene-phenol resins;
polyterpene resins; and
petroleum hydrocarbon resins such as synthetic polyterpene resins, aromatic hydrocarbon resins, aliphatic hydrocarbon resins, alicyclic hydrocarbon resins, aliphatic-alicyclic petroleum resins, aliphatic-aromatic petroleum resins, hydrogenated modified alicyclic hydrocarbon resins, hydrogenated hydrocarbon resins, liquid polybutene, liquid polybutadine and atactic polypropylene.

Among them, petroleum softeners, phenol-formaldehyde resins and petroleum hydrocarbon resins are preferred, more preferably petroleum softeners and petroleum hydrocarbon resins, and particularly preferably petroleum softeners.

Of the petroleum softeners, petroleum process oils are preffered, more preferably paraffinic process oils, naphthenic process oils and aromatic process oils, and particularly preferably paraffinic process oils. Among the petroleum hydrocarbon resins, alicyclic hydrocarbon resins are preferred.

Among these softeners, paraffinic process oils are particularly preferable.

The softeners (B) may be used either solely or in a combination of two or more of them.

### [Copolymer composition (I)]

The copolymer composition (I) used in the invention comprises 1 to 100 parts by weight, preferably 1 to 50 parts by weight, more preferably 5 to 25 parts by weight of the softener (B) based on 100 parts by weight of the nonconjugated polyene composition (A). The content of the softener in this range is preferred from the viewpoint of improving mechanical strength and fatigue resistance of the rubber composition.

A Mooney viscosity [ML₁₊₄ (100°C), JIS K6300] of the copolymer composition (I) is not particularly limited, but usually 5 to 100, preferably 10 to 50. When the copolymer composition (I) has the Mooney viscosity in the above-mentioned range, the rubber composition produced by the process according to the invention has excellent rubber elasticity, weather resistance, ozone resistance, and particularly mechanical property and fatigue resistance. Therefore, when the rubber composition of the invention is applied to a tire, the tire is excellent in both of braking performance and fuel consumption performance and is also excellent in rubber elasticity, weather resistance and ozone resistance, particularly mechanical property and fatigue resistance.

The copolymer composition (I) used in the invention can be prepared by mixing the nonconjugated polyene composition (A) and the softener (B) using the conventionally known methods, for example, the following methods:
(1) After preparing the nonconjugated polyene copolymer (A) and obtaining a product form (a bale or the like), the softener (B) is added thereto and they are kneaded to prepare the copolymer composition (I). In this case, an extruder, a Banbury mixer or the like are used for kneading.
(2) In the step of preparing the nonconjugated polyene copolymer (A), the softener (B) is added thereto and they are kneaded to prepare the copolymer composition (I). Alternatively, during a period after preparing the nonconjugated polyene copolymer (A) and before obtaining a product form (a bale or the like), the softener (B) is added thereto and they are kneaded to prepare the copolymer composition (I). In these cases, an extruder or the like are used for kneading.

Further, in the step of preparing the copolymer composition (I), optional components, as described below, other than the above (A), (B) and (C) may be added, and may be preferably in the small amount (30 parts by weight or less), based on 100 parts by weight of the nonconjugated polyene copolymer (A).

### (C) Diene rubber

As the diene rubber (C) used in the present invention, known diene rubber having double bond(s) in the main chain can be used without limitation, but a polymer or copolymer rubber made from a conjugated diene compound as the main monomer is preferred. The diene rubber (C) includes natural rubber (NR) and hydrogenated rubber. For the diene rubber (C), those which have iodine values of 100 or more, preferably 200 or more, more preferably 250 or more are preferred.

Examples of the diene rubber (C) include natural rubber (NR), isoprene rubber (IR), styrene/butadiene rubber (SBR), butadiene rubber (BR), chloroprene rubber (CR), acrylonitrile/butadiene rubber (NBR), nitrile rubber and hydrogenated nitrile rubber. Of these, natural rubber (NR), isoprene rubber (IR), styrene/butadiene rubber (SBR) and butadiene rubber (BR) are preferred, particularly preferably styrene/butadiene rubber (SBR). The diene rubbers (C) may be used alone or in a combination of two or more thereof.

As the natural rubber (NR), those standardized by Green Book (international package standards for qualities of commercial grades of natural rubber) may be used. As the isoprene rubber (IR), those having specific gravities in the range of 0.91 to 0.94 and Mooney viscosity [ML₁₊₄ (100°C), JIS K6300] in the range of 30 to 120 may be preferably used.

As the styrene/butadiene rubber (SBR), those having specific gravities in the range of 0.91 to 0.98 and Mooney viscosity [ML₁₊₄ (100°C), JIS K6300] in the range of 20 to 120 may be preferably used. As the butadiene rubber (BR), those having specific gravities in the range of 0.90 to 0.95 and Mooney viscosity [ML₁₊₄ (100°C), JIS K6300] in the range of 20 to 120 may be preferably used.

The diene rubber (C) may be used in the amount such that the weight ratio [(A)/(C)] of the nonconjugated polyene copolymer (A) and the diene rubber (C) is in the range of 60/40 to 0.1/99.9, preferably 50/50 to 1/99, more preferably 40/60 to 5/95. When the proportion of the contents of these components is in the range given above, it is possible to produce tires which are excellent in braking performance and fuel consumption performance, and to obtain the rubber composition which is excellent in weather resistance, the controlling of damping rate and the like. When the proportion of the contents of these components is in the preferable range given above, in particular in the more preferable range, it is possible to produce the rubber composition which is excellent in the balance between the braking performance and the fuel consumption performance, and to obtain the rubber composition which is excellent in weather resistance, in the controlling of damping rate and the like.

### Optional components

### (Softener (B))

In the process for producing the rubber composition according to the invention, the softener (B) is contained in the copolymer composition (I), but the softener (B) may be further compounded in the rubber composition obtained by the process according to the invention. In this case, the total amount of both the softener (B) in the copolymer composition (I) and the softener (B) to be further compounded may be 1 to 200 parts by weight, preferably 1 to 100 parts by weight, more preferably 1 to 80 parts by weight based on 100 parts by weight of the total amount of the nonconjugated polyene copolymer (A) and the diene rubber (C).

Examples of the softener (B) to be further compounded are the same as the softener (B) in the copolymer composition (I). Among them, petroleum softeners, phenol-formaldehyde resins and petroleum hydrocarbon resins are preferred, more preferably petroleum softeners and petroleum hydrocarbon resins, and particularly preferably petroleum softeners.

Of the petroleum softeners, petroleum process oils are preferred, more preferably paraffinic process oils, naphthenic process oils and aromatic process oils, and particularly preferably aromatic process oils. Among the petroleum hydrocarbon resins, alicyclic hydrocarbon resins are preferred.

Among these softeners, aromatic process oils are particularly preferable.

The softeners (B) contained in the copolymer composition (I) and the softeners (B) to be further compounded may be the same or different from each other, and most preferably, the softeners (B) contained in the copolymer composition (I) are paraffinic process oils and the softeners (B) to be further compounded are aromatic process oils.

### (Vulcanizing agent)

The rubber composition obtained by the process according to the present invention is a rubber composition capable of being vulcanized. While it may be used as a non-vulcanized product, more excellent features may be revealed by using it as a vulcanized product. The vulcanization may be carried out by a method of heating with a vulcanizing agent or by a method of irradiation of electron beam without using the vulcanizing agent.

When the rubber composition is vulcanized by heating it, compounds constituting a vulcanizing system such as a vulcanizing agent, a vulcanization accelerator and a vulcanization aid, may be admixed to the rubber composition. As the vulcanizing agent, for example, sulfur, sulfur compounds and organic peroxides may be used.

The morphological state of sulfur is not particularly limited and, for example, powdery sulfur, precipitated sulfur, colloidal sulfur, surface-treated sulfur and insoluble sulfur may be employed. Examples of the sulfur compounds include sulfur chloride, sulfur dichloride, polymeric polysulfide, morpholine disulfide, alkylphenol disulfide, tetramethylthiuram disulfide and selenium dimethyldithiocarbamate.

Examples of the organic peroxides include alkyl peroxides such as dicumyl peroxide, di-tert-butyl peroxide, di-tert-butylperoxy-3,3,5-trimethylcyclohexane, tert-butylcumyl peroxide, di-tert-amyl peroxide, 2,5-dimethyl-2,5-di(tert-butylperoxy)hexyne-3, 2,5-dimethyl-2,5-di(benzoylperoxy)hexane, 2,5-dimethyl-2,5-di(tert-butylperoxy)hexane, α,α'-bis(tert-butylperoxy-misopropyl)benzene and tert-butyl hydroperoxide;
peroxyesters such as tert-butyl peroxyacetate, tert-butyl peroxyisobutyrate, tert-butyl peroxypivalate, tert-butyl peroxymaleate, tert-butyl peroxyneodecanoate, tert-butyl peroxybenzoate and di-tert-butyl peroxyphthalate; and
ketone peroxides such as dicyclohexanone peroxide. These may be used alone or in a combination of two or more thereof.

Of these, organic peroxides having one minute half-value period temperatures in the range of 130 to 200°C are preferred, for example, dicumyl peroxide, di-tert-butyl peroxide, di-tert-butylperoxy-3,3,5-trimethylcyclohexane, tert-butylcumyl peroxide, di-tert-amyl peroxide and tert-butyl hydroperoxide are preferable.

Among the above various vulcanizing agents, sulfur and sulfur compounds are preferred, particularly preferably sulfur, since a rubber composition having excellent properties can be obtained by the use thereof.

In the case that the vulcanizing agent is sulfur or sulfur compounds, it may be used in an amount of 0.1 to 10 parts by weight, preferably 0.5 to 5 parts by weight, based on 100 parts by weight of the total amount of the nonconjugated polyene copolymer (A) and the diene rubber (C). In the case the vulcanizing agent is an organic peroxide, it may be used in an amount of 0.05 to 15 parts by weight, preferably 0.15 to 5 parts by weight, based on 100 parts by weight of the total amount of the nonconjugated polyene copolymer (A) and the diene rubber (C) .

When sulfur or a sulfur compound is used as the vulcanizing agent, it is preferable to use in combination with a vulcanizing accelerator.

Examples of the vulcanizing accelerator include sulfenamide compounds such as N-cyclohexyl-2-benzothiazole sulfenamide (CBS), N-oxydiethylene-2-benzothiazole sulfenamide and N,N-diisopropyl-2-benzothiazole sulfenamide;
thiazole compounds such as 2-mercaptobenzothiazole (MBT), 2-(2,4-dinitrophenyl)mercaptobenzothiazole, 2-(2,6-diethyl-4-morpholinothio)benzothiazole, 2-(4'-morpholinodithio)benzothiazole and dibenzothiazyl disulfide;
guanidine compounds such as diphenylguanidine, triphenylguanidine, diorthonitrile guanidine, orthonitrile biguanide and diphenylguanidine phthalate;
aldehyde-amine or aldehyde-ammonia compounds, such as acetaldehyde-aniline reaction products, butylaldehyde-aniline condensates, hexamethylenetetramine and acetaldehyde ammonia;
imidazoline compounds such as 2-mercaptoimidazoline;
thiourea compounds such as thiocarbanilide, diethylthiourea, dibutylthiourea, trimethylthiourea and di-o-tolylthiourea;
thiuram compounds such as tetramethylthiuram monosulfide, tetramethylthiuram disulfide (TMTD), tetraethylthiuram disulfide, tetrabutylthiuram disulfide, pentamethylenethiuram tetrasulfide and dipentamethylenethiuram tetrasulfide (DPTT);
dithioic acid salt compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate;
xanthates such as zinc dibutylxanthogenate; and zinc white.

The vulcanizing accelerator may be used in an amount of 0.1 to 20 parts by weight, preferably 0.2 to 10 parts by weight, based on 100 parts by weight of the total amount of the nonconjugated polyene copolymer (A) and the diene rubber (C).

In the case of using an organic peroxide as the vulcanizing agent, it is preferable to use in combination with a vulcanization aid in an amount of 0.5 to 2 moles, based on one mole of the organic peroxide, preferably in an amount nearly equimolar thereto. Examples of the vulcanization aid include, in addition to sulfur and a quinone dioxime compound such as p-quinone dioxime, a polyfunctional monomer, for example, a (meth)acrylate compound such as trimethylol propane triacrylate and polyethylene glycol dimethacrylate; an allyl compound such as diallyl phthalate and triallyl cyanurate; a maleimide compound such as m-phenylene-bis-maleimide; and divinylbenzene.

### (Reinforcing agent)

The rubber composition produced by the process according to the present invention may contain additives such as a reinforcing agent. Examples of the reinforcing agent include carbon black such as SRF, GPF, FEF, MAF, HAF, ISAF, SAF, FT and MT; surface-treated carbon black, prepared by subjecting these carbon blacks to surface treatment using a silane coupling agent, etc.; and inorganic fillers such as silica, activated calcium carbonate, light calcium carbonate, heavy calcium carbonate, ground talc, talc, ground silicate and clay.

The amount of the reinforcing agent to be compounded may be 300 parts by weight or less, preferably 10 to 300 parts by weight, more preferably 10 to 200 parts by weight, based on 100 parts by weight of the total amount of the nonconjugated cyclic polyene copolymer (A) and the diene rubber (C).

When the rubber composition contains such an amount of reinforcing agent, a vulcanized rubber exhibiting improved mechanical properties such as tensile strength, tear strength and abrasion resistance, can be obtained. It is possible to increase the hardness without deteriorating other material properties of the vulcanized rubber and to attain reduction of costs.

The rubber composition produced by the process according to the present invention may contain, in addition to the components mentioned above, as various agents, for example, a compound constituting a foaming agent system such as a foaming agent and a foaming aid, an antioxidant (stabilizer), a processing aid, a plasticizer, a colorant and other rubber compounding agents. The amount of these constituents may adequately be chosen for their sorts and amounts to be compounded. The types and formulating amounts of these components may be suitably selected depending on uses.

### (Foaming agent)

The rubber composition produced by the process according to the present invention, when containing compounds constituting a foaming agent system such as a foaming agent and a foaming aid, may be processed by foaming molding. As the foaming agent, those that are generally used for foaming molding of a rubber may be widely used.

Examples of the foaming agent include inorganic foaming agents such as sodium bicarbonate, sodium carbonate, ammonium bicarbonate, ammonium carbonate and ammonium nitrite;
nitroso compounds such as N,N'-dimethyl-N,N'-dinitrosoterephthalamide and N,N'-dinitrosopentamethylenetetramine;
azo compounds such as azodicarbonamide, azobisisobutyronitrile, azocyclohexylnitrile, azodiaminobenzene and barium azodicaboxylate;
sulfonylhydrazide compounds such as benzenesulfonylhydrazide, toluenesulfonylhydrazide, p,p'-oxybis(benzenesulfonylhydrazide) and diphenylsulfone-3,3'-disulfonylhydrazide; and
azides such as calcium azide, 4,4-diphenyldisulfonyl azide and p-toluenesulfonyl azide. Among them, nitroso compounds, azo compounds and azides are preferred.

The foaming agent may be used in an amount of 0.5 to 30 parts by weight, preferably 1 to 20 parts by weight, based on 100 parts by weight of the total amount of the nonconjugated cyclic polyene copolymer (A) and the diene rubber (C). Using a rubber composition containing such an amount of the foaming agent, a foamed product having an apparent specific gravity of 0.03 to 0.8 g/cm³ can be produced.

Further, a foaming aid may be used together with the foaming agent. The combined use of the foaming agent and the foaming aid may advantageously reduce the decomposition temperature of the foaming agent, promote the decomposition and uniform foams. The foaming aids include organic acids such as salicylic acid, phthalic acid, stearic acid and oxalic acid; urea and derivatives thereof.

The foaming aid may be used in an amount of 0.01 to 10 parts by weight, preferably 0.1 to 5 parts by weight, based on 100 parts by weight of the total amount of the nonconjugated cyclic polyene copolymer (A) and the diene rubber (C).

### (Antioxidant)

It is preferable that the rubber composition obtained by the process according to the present invention contains an antioxidant, since the service life of the material can be extended thereby. Examples of the antioxidant include aromatic secondary amine stabilizers such as phenylnaphthylamine, 4,4'-(α,α'-dimethylbenzyl)diphenylamine and N,N'-di-2-naphthyl-p-phenylenediamine;
phenol stabilizers such as 2,6-di-tert-butyl-4-methylphenol and tetrakis-[methylene-3-(3',5'-di-tert-butyl-4'-hydroxyphenyl)propionate]methane;
thioether stabilizers such as bis[2-methyl-4-(3-n-alkylthiopropionyloxy)-5-tert-butylphenyl]sulfide;
benzimidazole stabilizers such as 2-mercaptobenzimidazole;
dithiocarbamate stabilizers such as nickel dibutyldithiocarbamate; and
quinoline stabilizers such as polymerized products of 2,2,4-trimethyl-1,2-dihydroquinoline. These antioxidants may be used alone or in a combination of two or more.

The antioxidant may be used in an amount of 5 parts by weight or less, preferably 3 parts by weight or less, based on 100 parts by weight of the total amount of the nonconjugated polyene copolymer (A) and the diene rubber (C).

### (Processing aid)

As the processing aid, those generally used for rubbers may be widely used. Examples of the processing aid include acids such as ricinoleic acid, stearic acid, palmitic acid and lauric acid; salts of these higher fatty acids, such as barium stearate, zinc stearate and calcium stearate; or esters of these higher fatty acids.

The processing aid may be used in an amount of 10 parts by weight or less, preferably 5 parts by weight or less, based on 100 parts by weight of the total amount of the nonconjugated cyclic polyene copolymer (A) and the diene rubber (C).

### <Process for producing rubber composition>

The process for producing a rubber composition according to the present invention comprises, in preparing the rubber composition containing a nonconjugated polyene copolymer (A), a softener (B) and a diene rubber (C), the step of mixing a mixture (copolymer mixture (I)) of the nonconjugated polyene copolymer (A) and the softener (B), and the diene rubber (C).

In the process according to the present invention, the rubber composition may be prepared by a preparation technique generally used for preparing rubber blends without particular limitation as long as the softener (B) is incorporated in the nonconjugated polyene copolymer (A) before the nonconjugated polyene copolymer (A) and the diene rubber (C) are mixed. For example, the rubber composition may be prepared by kneading the copolymer composition (I), the diene rubber (C) and the optionally incorporated other conponents on an internal mixer such as Banbury mixer, a kneader or Intermix, at a temperature of 80 to 17'0°C for 3 to 10 minutes; admixing thereto a vulcanizing agent and, if necessary, a vulcanizing accelerator, a vulcanization aid, a foaming agent and the like to knead the resulting mixture on a roll such as open roll, or on a kneader at a roll temperature of 40 to 80°C for 5 to 30 minutes; and taking out the kneaded mass in portions. In this manner, the rubber composition (rubber blend) is usually obtained in the form of ribbon or sheet. In case where a low kneading temperature is permitted in the internal mixer, the vulcanizing agent, the vulcanizing accelerator, the foaming agent and the like may be simultaneously admixed thereto.

Further, a part of or all the softener (B) may be blended with the diene rubber (C) before the preparation of the rubber composition. For example, if the softener is oil, it may be referred to as an oil extended diene rubber where the oil is preliminarily contained therein. The content of the softener (B) is not particularly limited, but the content of the softener (B) is preferably 0 to 100 parts by weight or less based on 100 parts by weight of the diene rubber (C).

As the specific embodiments of the process according to the invention, there may be exemplified the following production process:
(1) After preparing the nonconjugated polyene copolymer (A) and obtaining a product form (a bale or the like), the softener (B) is added thereto and they are kneaded to prepare the copolymer composition (I). In this case, an extruder, a Banbury mixer and the like are used for kneading. Subsequently, the copolymer composition (I) and the diene rubber (C) are mixed to prepare the rubber composition according to the present invention.
(2) In the step of preparing the nonconjugated polyene copolymer (A), the softener (B) is added thereto and they are kneaded to prepare the copolymer composition (I). Alternatively, during a period after preparing the nonconjugated polyene copolymer (A) and before obtaining a product form (a bale or the like), the softener (B) is added thereto and they are kneaded to prepare the copolymer composition (I). In these cases, an extruder and the like are used for kneading. Subsequently, the copolymer composition (I) and the diene rubber (C) are mixed to prepare the rubber composition according to the present invention. The diene rubber (C) is usually added before the copolymer composition (I) is obtained as a product form (a bale or the like), but it may be added after the copolymer composition (I) is obtained as a product form (a bale or the like).

The vulcanized product (vulcanized rubber) of the rubber composition obtained by the process according to the present invention may be usually obtained by subjecting the unvulcanized green rubber composition described above to a preliminary forming by various forming techniques using forming apparatuses such as an extrusion molding machine, a calendar roll, a press machine, an injection molding machine and a transfer molding machine, into a desired form and effecting the vulcanization of the resulting formed product, simultaneously with this forming or after the formed product has been transferred to a vulcanization vessel, by heating it or irradiating it by an electron beam. In the case of the foamed product, the unvulcanized green rubber blend containing a foaming agent is subjected to vulcanization, as described above, wherein foaming of the formed product is simultaneously attained with the vulcanization so as to obtain a foamed product.

In the case of vulcanizing the rubber composition by heating, it is preferable to heat the formed product in a heating vessel, in a heating mode by hot air, glass beads fluidized bed, ultrahigh frequency electromagnetic wave (UHF), steam or hot molten-salt bath (LCM), at a temperature of 150 to 270°C for 1 to 30 minutes. In the case where the vulcanization is effected by irradiation with electron beam without incorporating the vulcanizing agent, the preliminarily formed rubber composition may be irradiated with an electron beam of energy of 0.1 to 10 MeV, preferably 0.3 to 2 MeV so as to reach an absorbed dose of 0.5 to 35 Mrad, preferably 0.5 to 10 Mrad. For effecting the molding vulcanization, a mold may or may not be used. In the case wherein no mold is used, the rubber composition is usually molded and vulcanized in a continuous manner.

### [Rubber composition]

The rubber composition according to the present invention comprises the nonconjugated polyene copolymer (A), the softener (B) and the diene rubber (C).

The rubber composition according to the present invention may be widely used as starting materials of rubber articles, and can be suitably used as the rubber material for tires. Specific examples of the rubber material for tires include materials for tire tread and for tire side wall. Above all, the rubber composition according to the present invention can be most preferably used for the material (raw material) for tire tread, whereby tires having both excellent braking performance and fuel consumption performance, and weather resistance, ozone resistance, and particularly mechanical property and fatigue resistance can be obtained, in which the characteristic properties of the rubber composition according to the present invention are most effectively revealed therefore. Further, tires having excellent abrasion resistance can be obtained.

As described above, the rubber composition according to the present invention may comprise only the nonconjugated polyene copolymer (A), the softener (B) and the diene rubber (C), or may further comprise other rubber(s), other resin(s), a vulcanizing agent, a vulcanization aid, a vulcanization accelerator, a filler and other components, for example, the above-mentioned additives.

The total content of the nonconjugated polyene copolymer (A) and the diene rubber (C) in the rubber composition according to the present invention is 3% by weight or more, preferably 5% by weight or more, and the upper limit thereof is not particularly limited, but it is preferably 90% by weight or less.

The rubber composition according to the present invention is excellent in rubber elasticity, weather resistance and ozone resistance, and in particularly mechanical property and fatigue resistance. Further, the rubber composition also has excellent abrasion resistance. Therefore, by applying the rubber composition of the present invention to tires, a tire which is excellent in both of braking performance and fuel consumption performance, and is also excellent in rubber elasticity, weather resistance and ozone resistance, in particularly mechanical property and fatigue resistance can be obtained. Furthermore, a tire which is also excellent in abrasion resistance can be obtained.

### [Rubber material for tires]

The rubber material for tires according to the present invention is characterized in that it comprises the rubber composition according to the present invention given above.

The rubber material for tires according to the present invention is excellent in both of braking performance and fuel consumption performance, and is also excellent in rubber elasticity, weather resistance and ozone resistance, in particularly mechanical property and fatigue resistance. Furthermore, the rubber material for tires according to the present invention is also excellent in abrasion resistance. Therefore, by applying the rubber material for tires according to the present invention to tires, a tire which is excellent in both of braking performance and fuel consumption performance, and is also excellent in rubber elasticity, weather resistance and ozone resistance, in particularly mechanical property and fatigue resistance can be obtained. Furthermore, a tire which is also excellent in abrasion resistance can be obtained.

### [Tire tread]

The tire tread according to the present invention is produced from the above rubber material for tires according to the present invention.

By applying the tire tread produced from the rubber material for tires according to the present invention under vulcanization to tires, a tire which is excellent in both of braking performance and fuel consumption performance, and is also excellent in rubber elasticity, weather resistance and ozone resistance, in particularly mechanical property and fatigue resistance can be obtained. Furthermore, a tire which is also excellent in abrasion resistance can be obtained.

### [Tire]

The tire according to the present invention is provided with the above-described tire tread according to the present invention. The tire according to the present invention is excellent in both of braking performance and fuel consumption performance, and is also excellent in rubber elasticity, weather resistance and ozone resistance, in particularly mechanical property and fatigue resistance. Furthermore, the tire is also excellent in abrasion resistance.

### EXAMPLES

The present invention will be described by way of Examples, but it is not intended to limit the present invention thereto.

### <Preparation of test sample>

### (Synthesis of nonconjugated polyene copolymer (A))

The composition (A), Mooney viscosity, a glass transition temperature (Tg) of the nonconjugated polyene copolymer was determined by the following method.
[1] Composition of nonconjugated polyene copolymer (A) The composition of the nonconjugated polyene copolymer (A) was determined by ¹H-NMR method.
[2] ML viscosity test
   For the ML viscosity, the Mooney viscosity [ML₁₊₄ (100°C)] was measured at 100°C using a Mooney viscometer (Type SMV-201) manufactured by Shimadzu Corporation according to JIS K6300.
[3] Glass transition temperature (Tg)

The temperature dependency of the loss tangent tan δ (vibration damping index) is determined, using a polymer sheet of 2 mm thickness, on a viscoelasticity tester (Model RDS-2, manufactured by Rheometrics Inc.) under conditions of a measuring temperature of -70 to 30°C, a frequency of 10 Hz, a strain ratio of 0.5% and a temperature elevation rate of 4°C/min, wherein the temperature, at which the value of the on tan δ was maximum, was defined as the glass transition temperature (Tg).

### [Synthesis Example 1]

The synthesis of the nonconjugated polyene copolymer (A) was carried out in a continuous way using a reactor equipped with a stirrer made of a stainless steel (SUS) and having a capacity of 300 liters under raw material supply conditions shown in the following Table 1, while maintaining the temperature at 40°C and keep the solution level at 100 L. The polymerized solution after polymerization was subjected to standard decalcification and then to steam stripping to obtain a polymer (hereinafter also referred as to a "copolymer 1 (EPT)").

Dichloroethoxyvanadium oxide was used as a main catalyst and ethylaluminum sesquichloride was used as a cocatalyst.

**[Table 1]**

| Hexane | Ethylene | Propylene | ENB | Hydrogen | Main catalyst | Co-catalyst |
|---|---|---|---|---|---|---|
| kg/h | kg/h | kg/h | kg/h | Nl/h | mmol/h | mmol/h |
| 44.6 | 1.2 | 10.6 | 1.11 | 7 | 9 | 63 |

The copolymer 1 (EPT) had a composition containing 60.9 mol% of the structural units derived from ethylene, 30.1 mol% of the structural units derived from propylene and 9.0 mol% of structural units derived from ENB (5-ethylidene-2-norbornene); a Mooney viscosity [ML₁₊₄ (100°C), JIS K6300] of 55 and a glass transition temperature (Tg) of -5°C. The yield of the copolymer 1 (EPT) was 0.71 kg per hour.

### (Preparation of copolymer composition)

### [Copolymer composition (I-1)]

As shown in Table 2, 100 parts by weight of the nonconjugated polyene copolymer [copolymer 1 (EPT)] and 5 parts by weight of a paraffinic process oil [trade name: DIANA PROCESS OIL PW-380, manufactured by Idemitsu Kosan Co. Ltd.] (softener (B)) were kneaded for 5 minutes using a 3-liter pressurized kneader to prepare the copolymer composition (I-1). The obtained copolymer composition had a Mooney viscosity [ML₁₊₄ (100°C), JIS K6300] of 43.2.

### [Copolymer compositions (I-2) to (I-8)]

The copolymer compositions (I-2) to (I-8) were prepared in the same manner as the copolymer composition (I-1) except that types and formulating amounts of the softener [(B) component] are changed as shown in Table 2. Mooney viscosities [ML₁₊₄ (100°C), JIS K6300] of the obtained copolymer compositions are shown in Table 1, respectively.

**[Table 2]**

| Copolymer composition | (I-1) | (I-2) | (I-3) | (I-4) | (I-5) | (I-6) | (I-7) | (I-8) |
|---|---|---|---|---|---|---|---|---|
| <Formulation> [Parts by weight] | | | | | | | | |
| (A) Component | | | | | | | | |
| Copolymer 1 (EPT) | 100 | 100 | 100 | 100 | 100 | 100 | 100 | 100 |

| (B) Component | | | | | | | | |
|---|---|---|---|---|---|---|---|---|
| Paraffinic process oil-1 *1 | 5 | 10 | 15 | 20 | | | | |
| Paraffinic process oil-2 *2 | | | | | 5 | 10 | 15 | 20 |

| <Properties> | | | | | | | | |
|---|---|---|---|---|---|---|---|---|
| [ML₁₊₄ (100°C)] | 43.2 | 36.6 | 30.2 | 25.2 | 42.0 | 34.2 | 28.3 | 23.5 |

| | | | | | | | | |
|---|---|---|---|---|---|---|---|---|
| *1: Paraffinic process oil-1: DIANA PROCESS OIL PW-380, manufactured by Idemitsu Kosan Co. Ltd. *2: Paraffinic process oil-1: DIANA PROCESS OIL PW-100, manufactured by Idemitsu 5 Kosan Co. Ltd. | | | | | | | | |

### (Preparation of rubber composition)

### [Comparative Examples 1 and 2]

The component (A) (nonconjugated polyene copolymer), the component (C) (diene rubber), silica and coupling agent MB of compounding components shown in Table 3 were mixed for 2 minutes using a 1.7 liter closed Banbury mixer, and then carbon black, the component (B) (aromatic oil), zinc white and stearic acid were added thereto and mixed for 2 minutes to prepare a master batch. The master batch, a vulcanization accelerator and sulfur were kneaded with a 6-inch open roll having the front/rear roll surface temperature of 50°C to prepare the rubber composition. This rubber composition was press vulcanized in a mold of 15 cm × 15 cm × 0.2 cm at 160°C for 20 minutes to prepare the desired test samples.

### [Example 1]

The copolymer composition (I-1), the component (C) (diene rubber), silica and coupling agent MB were mixed for 2 minutes using a 1.7 liter closed Banbury mixer, and then carbon black, the component (B) (aromatic oil), zinc white and stearic acid were added thereto and mixed for 2 minutes to prepare a master batch. The master batch, a vulcanization accelerator and sulfur were kneaded with a 6-inch open roll to prepare the rubber composition. This rubber composition was press vulcanized in a mold of 15 cm × 15 cm × 0.2 cm at 160°C for 20 minutes to prepare the desired test sample. The formulating amount, trade name and the like of each component are as shown in Table 3.

### [Examples 2 to 8]

The desired test samples were prepared in the same manner as in Example 1 except that the type and formulating amount of each component are changed as shown in Table 3, respectively.

**Table.3**

| | Comp. Ex. 1 | Comp. Ex. 2 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| <Formulation> [Parts by weight] | | | | | | | | | | |

| Component (A) | | | | | | | | | | |
|---|---|---|---|---|---|---|---|---|---|---|
| Copolymer 1 (EPT) | | 20 | | | | | | | | |

| Component (I) | | | | | | | | | | |
|---|---|---|---|---|---|---|---|---|---|---|
| Copolymer composition (I-1) | | | 21 | | | | | | | |
| Copolymer composition (1-2) | | | | 22 | | | | | | |
| Copolymer composition (1-3) | | | | | 23 | | | | | |
| Copolymer composition (1-4) | | | | | | 24 | | | | |
| Copolymer composition (I-5) | | | | | | | 21 | | | |
| Copolymer composition (1-6) | | | | | | | | 22 | | |
| Copolymer composition (1-7) | | | | | | | | | 23 | |
| Copolymer composition (I-8) | | | | | | | | | | 24 |

| Component (C) | | | | | | | | | | |
|---|---|---|---|---|---|---|---|---|---|---|
| SBR *1 | 103.125 | 82.5 | 82.5 | 82.5 | 82.5 | 82.5 | 82.5 | 82.5 | 82.5 | 82.5 |
| BR *2 | 25 | 20 | 20 | 20 | 20 | 20 | 20 | 20 | 20 | 20 |
| Zinc white *3 | 3 | 3 | 3 | 3 | 3 | 3 | 3 | 3 | 3 | 3 |
| Stearic acid | 1 | 1 | 1 | 1 | 1 | 1 | 1 | 1 | 1 | 1 |

| Component (B) | | | | | | | | | | |
|---|---|---|---|---|---|---|---|---|---|---|
| Aromatic process oil *4 | 16.875 | 27.5 | 26.5 | 25.5 | 24.5 | 23.5 | 26.5 | 25.5 | 24.5 | 23.5 |
| Wet silica *5 | 36 | 36 | 36 | 36 | 36 | 36 | 36 | 36 | 36 | 36 |
| ISAF Carbon black *6 | 40 | 40 | 40 | 40 | 40 | 40 | 40 | 40 | 40 | 40 |
| Coupling agent MB *7 | 8 | 8 | 8 | 8 | 8 | 8 | 8 | 8 | 8 | 8 |
| Vulcanization accelerator (CBS) *8 | 1.7 | 1.7 | 1.7 | 1.7 | 1.7 | 1.7 | 1.7 | 1.7 | 1.7 | 1.7 |
| Vulcanization accelerator (DPG) *9 | 2 | 2 | 2 | 2 | 2 | 2 | 2 | 2 | 2 | 2 |
| Sulfur | 1.4 | 1.4 | 1.4 | 1.4 | 1.4 | 1.4 | 1.4 | 1.4 | 1.4 | 1.4 |

| | | | | | | | | | | |
|---|---|---|---|---|---|---|---|---|---|---|
| *1: SBR (styrene/butadiene rubber) [bonded styrene=23.5%, ML₁₊₄ (100°C)=49, aromatic oil 37.5 phr oil-extended product]: Nipol 1712 (ZEON Corporation) *2: BR (butadiene rubber) [ML₁₊₄ (100°C)=23]: Nipol 1220 (ZEON Corporation) *3: Zinc white: two types of zinc oxides (Hakusui Tech Co., Ltd.) *4: Aromatic process oil: DIANA PROCESS OIL AH-24, manufactured by Idemitsu Kosan Co. Ltd.] *5: Wet silica: NIPSIL VN3 (Nippon Silica Co., Ltd.) *6: ISAF carbon black: ASAHI #80 (Asahi Carbon Co., Ltd.) *7: Coupling agent MB: SILANOGRAN Si-69/GR (Seika Sangyo Co., Ltd.) *8: Vulcanization accelerator (CBS): SANCELER CM (Sanshin Chemical Industry Co., Ltd.) *9: Vulcanization accelerator (DPG): SANCELER D-G (Sanshin Chemical Industry Co., Ltd.) | | | | | | | | | | |

### <Evaluation method>

The evaluation method of the test sample is as follows.
[1] ML viscosity test
   For the ML viscosity, the Mooney viscosity [ML₁₊₄ (100°C)] was measured at 100°C using a SMV-201-type Mooney viscometer manufactured by Shimadzu Corporation according to JIS K6300.
[2] Tensile Test
   Dumbbell-shaped No. 3 test pieces described in JIS K 6251 (2001) were punched from the vulcanized rubber sheets and the tensile test was performed using the test pieces under conditions of a measuring temperature of 25°C and a tensile speed of 500 mm/min. according to the procedure prescribed in JIS K 6251 (2001). 100% modulus (M₁₀₀), 200% modulus (M₂₀₀), 300% modulus (M₃₀₀), tensile stress at break (T_{B}), and tensile elongation at break (E_{B}) were measured.
[3] Harness test
   The hardness test was conducted according to JIS K6253 (2001) and the spring hardness H_{A} (Shore A hardness) was measured.
[4] Dynamic tensile fatigue test
   Dumbbell-shaped No. 1 test pieces described in JIS K 6251 were punched from the vulcanized rubber sheet and the test pieces had dents of 2 mm formed at the center of the longitudinal direction. The five test pieces thus obtained were subjected to extension fatigue under conditions of an extension rate of 40%, a preset temperature of 23°C and a rotation speed of 300 times/min using a constant elongation and constant load fatigue tester (Model FT-3121, manufactured by Ueshima Seisakusho Co., Ltd.). An average value of the times at which the dumbbells were broken, and an average value of stress at break were determined.
[5] Ozone resistance test
   The vulcanized rubber sheets having a thickness of 2 mm were subjected to dynamic ozone resistance test under conditions of an ozone concentration of 50 pphm, a measuring temperature of 40°C and an elongation rate (dynamic elongation) 0 → 25% and a frequency of 1 Hz, in accordance with JIS K6259 (2001) and generation of crack was observed after 72 hours from the initiation of the test to evaluate. Each Example was twice evaluated. Generation of crack was observed according to the following criterion for (i) the number of cracks, (ii) the size and depth of crack and the combination of (i) and (ii) was recorded. Further, "NC" in Table indicates that there were no cracks.
   (i) Number of cracks
      A: a few cracks, B: many cracks, C: too many cracks
   (ii) Size and depth of crack
      1: Not visible by the naked eye but confirmed by magnifier of 10 magnifications
      2: Visible by the naked eye
      3: Deep and relatively large (less than 1 mm)
      4: Deep and large (1 mm or more to less than 3 mm)
      5: 3 mm or more, or likely to be cut
[6] Dynamic viscoelasticity test
   The temperature dependency of the loss tangent tan δ (vibration damping index) was determined, using a vulcanized rubber sheet of 2 mm thickness, on a viscoelasticity tester (Model RDS-2, manufactured by Rheometrics Inc.) under conditions of a measuring temperature of -70 to 100°C, a frequency of 10 Hz, a strain ratio of 0.05% and a temperature elevation rate of 4°C/min. The tan δ (damping rate) of the rubber composition at -10°C was represented as an index of braking performance of a tire. The larger is the tanδ at -10°C, the more excellent the braking performance of the tire is. The tan δ (damping rate) of the rubber composition at 60°C was represented as an index of fuel consumption of a vehicle. The smaller is the tan δ at 60°C, the more excellent the fuel consumption of the vehicle is.
[7] Lambourn abrasion test
   The amount of Lambourn abrasion was measured under conditions of a loss of 10 N and slip ratio of 50% according to JIS K 6264, and the abrasion volume of Comparative Example 1 were defined to be 100 and abrasion resistance was represented as an index. The larger the index is, the smaller the abrasion volume and the better the abrasion resistance.

### [Comparative Examples 1 and 2 and Examples 1 to 8]

Comparative Example 2 where the component (A) was compounded, exhibited improved dynamic ozone resistance, braking performance (tan δ at -10°C) and fuel consumption performance (tan δ at 60°C), but exhibited reduced T_{B} (tensile stress at break), E_{B} (tensile elongation at break) and fatigue resistance as compared to Comparative Example 1.

Examples 1 to 8 where the copolymer composition (I) was used, exhibited improved T_{B}, E_{B} and fatigue resistance as compared to Comparative Example 2, and thus all the performances required for the tire could be improved with good balance. The results are shown in Table 4.

**Table 4**

| | Comp. Ex. 1 | Comp. Ex. 2 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| <Physical properties in ordinary state> | | | | | | | | | | |
| H_{A} | 62 | 64 | 62 | 63 | 63 | 62 | 63 | 63 | 63 | 62 |
| M₁₀₀[MPa] | 1.86 | 1.93 | 1.87 | 1.95 | 2.01 | 1.87 | 1.90 | 1.91 | 1.93 | 1.88 |
| M₂₀₀[MPa] | 5.22 | 5.23 | 5.14 | 5.40 | 5.61 | 5.13 | 5.22 | 5.18 | 5.37 | 5.18 |
| M₃₀₀[MPa] | 9.89 | 9.73 | 9.55 | 9.93 | 10.31 | 9.48 | 9.70 | 9.59 | 9.98 | 9.63 |
| T_{B}[MPa] | 18.2 | 16.8 | 16.7 | 18.4 | 19.4 | 16.9 | 17.8 | 17.6 | 18.7 | 16.9 |
| E_{B}[%] | 470 | 450 | 460 | 490 | 490 | 470 | 470 | 480 | 490 | 470 |
| Tensile product (T_{B} × E_{B}) | 8554 | 7547 | 7682 | 9016 | 9506 | 7943 | 8366 | 8448 | 9163 | 7943 |

| <Fatigue resistance> | | | | | | | | | | |
|---|---|---|---|---|---|---|---|---|---|---|
| Number of breaking [times] | 14410 | 12940 | 18680 | 15280 | 13810 | 14130 | 18960 | 18950 | 17580 | 16610 |
| Stress at break [N] | 8.4 | 5.5 | 5.8 | 7.6 | 8.2 | 7.9 | 7.8 | 7.8 | 7.4 | 6.4 |

| <Dynamic ozone resistance> | | | | | | | | | | |
|---|---|---|---|---|---|---|---|---|---|---|
| Generation of crack | C-5/C-5 | B-2/B-2 | B-2/NC | NC/B-2 | B-2/B-2 | B-2/B-2 | NC/NC | NC/NC | NC/NC | NC/B-2 |

| <Viscoelasticity> | | | | | | | | | | |
|---|---|---|---|---|---|---|---|---|---|---|
| tan δ (-10°C) | 0.318 | 0.465 | 0.472 | 0.478 | 0.475 | 0.471 | 0.480 | 0.471 | 0.477 | 0.470 |
| tan δ (60°C) | 0.181 | 0.165 | 0.166 | 0.165 | 0.167 | 0.168 | 0.166 | 0.167 | 0.165 | 0.164 |
| <abrasion resistance> | 100 | 85 | 102 | 101 | 102 | 101 | 102 | 102 | 102 | 101 |

### INDUSTRIAL APPLICABILITY

The present invention relates to a new and useful process for producing a rubber composition containing a nonconjugated polyene copolymer, a softener and a diene rubber, a rubber composition obtained by the process, and use of thereof. The rubber composition prepared by the process may be widely used as raw materials of rubber articles, and can be suitably used as the rubber material for tires. Specific examples of the rubber material for tires include materials for tire tread and for tire side wall. Above all, the rubber composition according to the present invention can be most preferably used for the material (raw material) for tire tread, whereby tires excellent in both of braking performance and fuel consumption performance, and weather resistance, ozone resistance, and particularly mechanical property and fatigue resistance can be obtained.

## Claims

1. A process for producing a rubber composition containing a nonconjugated polyene copolymer (A), a softener (B) and a diene rubber (C), comprising:
a step of mixing
a copolymer composition (I) comprising 100 parts by weight of the nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of the softener (B);
the diene rubber (C); and
optionally further the softener (B).

2. A process for producing a rubber composition containing a nonconjugated polyene copolymer (A), a softener (B) and a diene rubber (C), comprising:
a step of preparing a copolymer composition (I) comprising 100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C, and 1 to 100 parts by weight of a softener (B); and
a step of mixing the copolymer composition (I), the diene rubber (C) and optionally further the softener (B).

3. The process according to claim 1 or 2, wherein
the weight ratio [(A)/(C)] of the nonconjugated polyene copolymer (A) and the diene rubber (C) is 60/40 to 0.1/99.9 and
the content of the softener (B) is 1 to 200 parts by weight based on 100 parts by weight of the total amount of the nonconjugated polyene copolymer (A) and the diene rubber (C).

4. The process according to any one of claims 1 to 3, wherein the copolymer composition (I) has a Mooney viscosity [ML₁₊₄ (100°C), JIS K6300] of 5 to 100.

5. The process according to any one of claims 1 to 4, wherein the structural units derived from α-olefin (A1) comprise structural units (a) derived from ethylene, and have a molar ratio [(a)/(b)] of the structural units (a) derived from ethylene and the structural units (b) derived from α-olefin having 3 or more carbon atoms of 100/0 to 1/99.

6. The process according to any one of claims 1 to 5, wherein at least a part of the nonconjugated polyene (A2) is nonconjugated cyclic polyene (A2a).

7. The process according to claim 6, wherein the structural units derived from nonconjugated cyclic polyene (A2a) are contained in the range of 4 mol% or more based on 100 mol% of the total amount of the structural units derived from α-olefin (A1) and the structural units derived from nonconjugated polyene (A2).

8. A rubber composition prepared by the process according to any one of claims 1 to 7.

9. A rubber material for a tire, comprising the rubber composition according to claim 8.

10. A tire tread formed using the rubber material for a tire according to claim 9.

11. A tire provided with the tire tread according to claim 10.

12. A copolymer composition (I), comprising:
100 parts by weight of a nonconjugated polyene copolymer (A), said nonconjugated polyene copolymer (A) being a random copolymer containing 96 to 70 mol% of the structural units derived from α-olefin (A1) and 4 to 30 mol% of the structural units derived from nonconjugated polyene (A2) and having a glass transition temperature (Tg) of -25 to 20°C; and
1 to 100 parts by weight of a softener (B).

13. The copolymer composition (I) according to claim 12, having a Mooney viscosity [ML₁₊₄ (100°C), JIS K6300] of 5 to 100.

14. The copolymer composition (I) according to claim 12 or 13, wherein the softener (B) is a petroleum softener.
